# FASCICULE DE BREVET EUROPEEN

(11) **EP 0 334 775 B1**
(45) Date de publication et mention de la délivrance du brevet: **13.10.1993**
(21) Numéro de dépôt: 89420091.4
(22) Date de dépôt: 15.03.1989
(51) Int. Cl.: G11B 15/12, G11B 15/02

(54) **Dispositif de commutation d'une bobine**
Schaltungsgerät für eine Spule
Coil switching device

(30) Priorité: 18.03.1988 FR 8803899
(43) Date de publication de la demande: 27.09.1989
(73) Titulaire: SGS-THOMSON MICROELECTRONICS S.A., 94250 Gentilly (FR)
(72) Inventeur: Meunier, Thierry, D-7730 Obereschach (DE); Jaffard, Jean-Luc, F-38120 Saint Egreve (FR)
(74) Mandataire: de Beaumont, Michel

(56) Documents cités:
- EP-A- 0 006 142
- FR-A- 2 141 874
- US-A- 3 824 623
- US-A- 4 044 387
- US-A- 4 198 664
- IBM TECHNICAL DISCLOSURE BULLETIN, vol. 17, no. 8, janvier 1975, pages 2415-2417, New York, US; S.D. KEIDL: "Multiple head read/write and head select circuit"

## Description

La présente invention concerne un dispositif de commutation d'une bobine entre un état où elle est alimentée et un état où elle est utilisée comme récepteur. Ainsi, la présente invention vise plus particulièrement la commutation d'une bobine utilisée en relation avec une tête magnétique de magnétoscope pouvant servir de tête de lecture ou d'écriture.

Dans l'état de lecture, l'une des bornes de la bobine est placée à la masse et la tension sur l'autre borne est détectée. Dans l'état d'écriture, la borne qui était à la masse est connectée à une source de courant et l'autre borne est reliée à une tension d'alimentation, des moyens étant prévus pour moduler la source de courant et faire passer dans la bobine un courant fonction du signal à enregistrer.

Quand on veut passer d'un état à l'autre, il convient d'éviter qu'une tension soit appliquée à la bobine alors que son autre borne est reliée directement à la masse et inversement que cette autre borne soit reliée à la masse alors qu'une tension est en cours d'application sur la bobine. En effet, il pourrait alors se produire de surintensités et des surtensions néfastes au fonctionnement et à la durée de vie du dispositif.

Dans l'art antérieur, pour résoudre ce problème, on est généralement arrivé à des dispositifs difficilement intégrables et comprenant un grand nombre de commutateurs dont le fonctionnement devait être soigneusement synchronisé par des procédés complexes.

Le document US-A-4.044.387 décrit un circuit de commutation de deux têtes de lecture, comprenant quatre interrupteurs pour commuter les têtes de lecture entre un mode de lecture et un mode d'écriture.

Un objet de la présente invention est de prévoir un tel dispositif de commutation qui soit particulièrement simple, comprenne un petit nombre de commutateurs, et soit facilement intégrable.

Pour atteindre ces objets, la présente invention prévoit un dispositif de commutation d'une bobine tel que décrit dans la revendication 1.

Selon un mode de réalisation de la présente invention, le moyen de détection et de commande comprend un comparateur comparant la tension d'alimentation à une tension prédéterminée inférieure à la chute de tension en direct de la diode.

Selon un mode de réalisation de la présente invention, la source d'alimentation est reliée à la diode par l'intermédiaire d'un circuit à constante de temps, le premier commutateur étant disposé entre la source d'alimentation et ce circuit à constante de temps.

Selon un mode de réalisation de la présente invention, il est prévu des moyens pour décharger le circuit à constante de temps après que le premier commutateur a été ouvert et que la tension a atteint la tension de seuil de la diode.

On notera qu'un avantage particulier résultant de la simplicité et du caractère intégrable du circuit se manifeste dans le cas d'une application à magnétoscope où des fréquences élevées sont mises en oeuvre et où la multiplication des composants et des connexions entraîne l'existence de réactances parasites.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 représente partiellement sous forme de blocs un mode de réalisation de la présente invention ; et
les figures 2A, 2B, 2C représentent des chronogrammes utiles à la compréhension du fonctionnement du circuit de la figure 1.

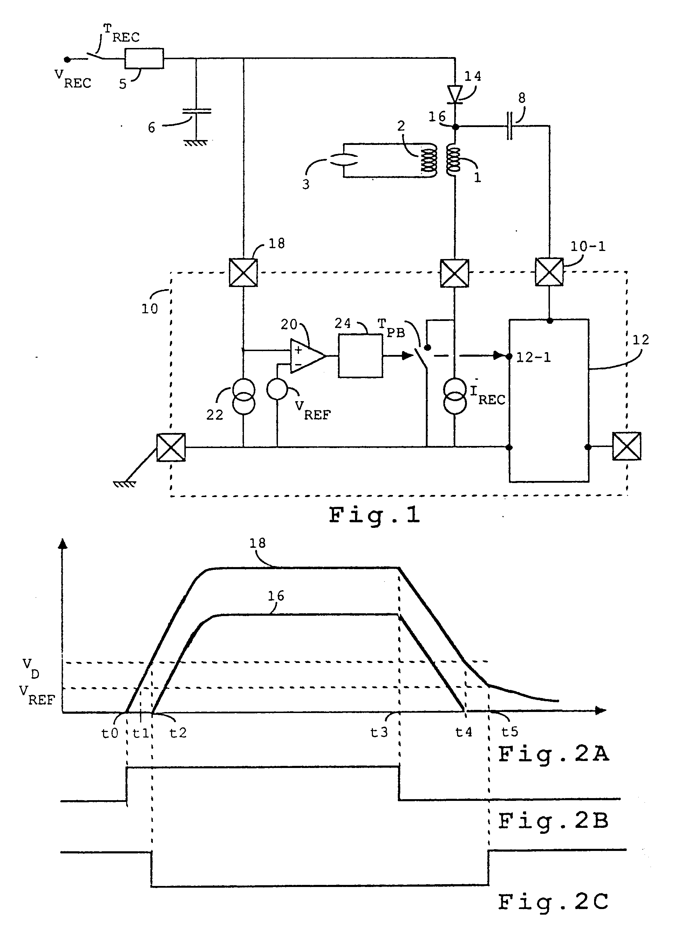

En figure 1, la bobine dont on veut commander la commutation est désignée par la référence 1. Elle est couplée à une bobine 2 en série avec une tête de lecture/écriture de magnétoscope 3.

Dans le mode d'écriture ou d'enregistrement, la bobine 1 est connectée en série avec une source d'alimentation V_{REC} par l'intermédiaire d'un commutateur T_{REC} et d'un circuit de constante de temps comprenant par exemple une impédance série 5 et un condensateur parallèle 6. L'autre borne de la bobine 1 est reliée à la masse par l'intermédiaire d'une source de courant I_{REC}. Cette source de courant est par exemple incluse dans un circuit intégré 10 comprenant des moyens, non représentés, pour assurer la modulation du courant en fonction du signal à enregistrer par la tête d'enregistrement 3.

Dans le mode de lecture ou de reproduction, la borne inférieure de la bobine 1 est reliée directement à la masse par un interrupteur T_{PB} et l'autre borne de la bobine 1 est reliée par un condensateur 8 à une entrée 10-1 du circuit intégré 10 couplée à un amplificateur 12 pour fournir sur une borne de sortie du circuit intégré le signal de lecture.

Ainsi, dans une phase d'enregistrement, l'interrupteur T_{REC} est fermé et l'interrupteur T_{PB} est ouvert alors que, dans une phase de lecture, l'interrupteur T_{REC} est ouvert alors que l'interrupteur T_{PB} est fermé.

Selon l'invention, seul l'interrupteur T_{REC} est manipulé de l'extérieur et l'interrupteur T_{PB} est automatiquement commandé de façon à éviter la fermeture de cet interrupteur alors qu'une tension est appliquée sur la bobine 1. Dans ce but, la présente invention comprend une diode 14 connectée entre la borne supérieure 16 de la bobine 1 et la tension d'alimentation, de la façon représentée. La deuxième borne de la diode 14, non connectée à la borne 16, est également reliée à un plot d'entrée 18 du circuit intégré et de là à la borne d'entrée non-inverseuse d'un comparateur 20. Le plot 18 est également relié à la masse par l'intermédiaire d'une source de courant 22. La borne d'entrée inverseuse du comparateur 20 est reliée à la masse par l'intermédiaire d'une source de tension V_{REF}. La sortie du comparateur 20 est reliée par l'intermédiaire d'un circuit d'interface 24, comprenant notamment des bascules, à l'entrée de commande de l'interrupteur T_{PB} et éventuellement à d'autres points du circuit, par exemple, comme cela a été représenté, à une entrée 12-1 de l'amplificateur 12.

Dans la figure 1, un carré dans lequel est inscrit une croix désigne un plot d'entrée du circuit intégré 10.

Le fonctionnement du circuit de la figure 1 sera expliqué plus en détail en relation avec les figures 2A, 2B et 2C parmi lesquelles la figure 2A représente le niveau de tension continue sur les bornes 16 et 18, la figure 2B représente l'état du commutateur T_{REC} et la figure 2C l'état du commutateur T_{PB}. Dans les figures 2B et 2C, l'état haut correspond à l'état fermé d'un commutateur.

Si on suppose que l'on part d'un état de lecture, dans lequel le commutateur T_{REC} est ouvert et le commutateur T_{PB} est fermé, et qu'à un instant t₀ on ferme le commutateur T_{REC}, la tension va commencer à croître sur la borne 18 tandis que le condensateur 6 se charge. A l'instant t₁, quand cette tension atteint la valeur V_{REF} qui est choisie inférieure à la chute de tension en direct V_{D} dans la diode 14, le comparateur 20 commute et le circuit d'interface 24 provoque l'ouverture du commutateur T_{PB}. On notera que cette ouverture se produit alors qu'aucune tension n'est présente sur la borne 16, une tension ne commençant à apparaître sur cette borne qu'une fois que la tension aux bornes du condensateur 6 a atteint la valeur V_{D}, à l'instant t₂.

Le mode enregistrement demeure jusqu'à un instant t₃ où l'interrupteur T_{REC} est ouvert. A partir de cet instant t₃, la tension aux bornes du condensateur 6 se décharge linéairement sous l'effet de la source de courant I_{REC} jusqu'à un instant t₄ où la tension sur la borne 18 a atteint la chute de tension en direct dans la diode 14. Ensuite, la tension sur la borne 18 continue à décroître sous l'effet de la source de courant 22 et, à un instant t₅, quand cette tension a atteint la valeur V_{REF}, le comparateur 20 commute à nouveau pour entraîner par l'intermédiaire du circuit d'interface 24 la fermeture de commutateur T_{PB}.

On notera que la séquence d'événements mise en oeuvre par le circuit selon la présente invention présente l'avantage d'être totalement automatique à partir du moment où le seul commutateur T_{REC} est actionné et que le circuit "vérifie" que la tension aux bornes de la bobine 1 est nulle avant de commuter le commutateur T_{PB}. Ainsi, ce circuit est particulièrement simple car un seul commutateur est actionné et que le deuxième commutateur est actionné automatiquement.

Ce circuit peut, comme cela a été représenté, être essentiellement réalisé sous forme d'un circuit intégré et ne nécessite pratiquement pas de composants externes tels que des commutateurs ou des filtres pour fournir des retards. En outre, du fait de sa simplicité, ce circuit ne nécessite que l'utilisation d'une faible surface de circuit intégré. D'autre part, étant donné que l'on sait bien générer une tension de référence V_{REF} inférieure de façon déterminée à la tension de seuil de conduction en direct d'une diode, ce circuit offre une grande sécurité de fonctionnement et ne nécessite aucun réglage externe.

Bien entendu, ce circuit est susceptible de diverses variantes et modifications qui apparaîtront à l'homme de l'art qui saura notamment réaliser divers types de circuit d'interface et divers types de commutateurs tels que le commutateur T_{PB} réalisés dans les circuits intégrés, par exemple sous forme de transistors bipolaires.

## Revendications

1. Dispositif de commutation d'une bobine (1) entre un premier etat ou elle est alimentée et dans ce but connectée entre une source d'alimentation (V_{REC}) et la masse par l'intermédiaire d'une impédance (I_{REC}), et un second état où elle est utilisée comme récepteur et dans ce but connectée entre un circuit de réception (12) et las masse, un premier commutateur (T_{REC}) étant disposé entre la première borne (16) de la bobine (1) et la source d'alimentation, caractérisé en ce qu'il comprend:
- une diode (14) connectée entre la première borne (16) de la bobine et le premier commutateur, selon une polarité propre à laisser circuler un courant de la source d'alimentation vers la bobine,
- un deuxième commutateur (T_{PB}) connecté en parallèle sur ladite impédance (I_{REC}) entre la deuxième borne de la bobine (1) et la masse,
- des moyens (22) pour tirer le potentiel du point de connexion (18) entre la diode (14) et le premier commutateur vers la masse après que le premier commutateur a été ouvert, et
- un moyen de détection et de commande (20, 24) connecté audit point de connexion (18) pour détecter l'instant où le potentiel entre la diode et la masse devient égal à une valeur prédéterminée (V_{REF}) inférieure à la chute de tension en direct (V_{D}) aux bornes de la diode et pour commander alors ledit deuxième commutateur (T_{PB}).

2. Dispositif de commutation selon la revendication 1, caractérisé en ce que le moyen de détection et de commande caractérisé en ce que le moyen de détection et de commande comprend un comparateur (20) comparant la tension audit point de connexion à une tension prédéterminée (V_{REF}) inférieure à la chute de tension en direct de la diode.

3. Dispositif de commutation selon la revendication 1, caractérisé en ce que la source d'alimentation est reliée à la diode par l'intermédiaire d'un circuit à constante de temps (5, 6), le premier commutateur (T_{REC}) étant disposé entre la source d'alimentation et ce circuit à constante de temps.

4. Dispositif de commutation selon la revendication 1, caractérisé en ce que ladite impédance (I_{REC}) est une source de courant.

## Claims

1. A device for switching a coil (1) between a first state where it is supplied and, for this purpose, connected between a supply source (V_{REC}) and ground through an impedance (I_{REC}) and a second state where it is used as a receiver and, for this purpose, connected between a receiving circuit (12) and ground, a first switch (T_{REC}) being arranged between the first terminal (16) of said coil (1) and said supply source, characterized in that it comprises:
- a diode (14) connected between said first terminal (16) of said coil and the first switch according to a polarity suitable for having a current flowing from the supply source to said coil;
- a second switch (T_{PB}) connected in parallel to said impedance (I_{REC}) between the second terminal of the coil (1) and ground;
- means (22) for pulling the potential of the junction (18) between the diode (14) and the first switch to ground after opening of the first switch; and
- a detection and control means (20, 24) connected to said junction (18) for detecting the time when the voltage between the diode and ground becomes equal to a predetermined value (V_{REF}) lower than the forward voltage drop (V_{D}) across the diode and for thereby controlling said second switch (T_{PB}).

2. A switching device according to claim 1, characterized in that the detection and control means comprises a comparator (20) comparing the voltage at said junction with a predetermined voltage (V_{REF}) lower than the forward voltage drop of the diode.

3. A switching device according to claim 1, characterized in that the power supply source is connected to the diode through a time constant circuit (5, 6), the first switch (T_{REC}) being arranged between the supply source and said time constant circuit.

4. A switching device according to claim 1, characterized in that said impedance (I_{REC}) is a current source.

## Patentansprüche

1. Vorrichtung zum Umschalten einer Spule (1) zwischen einem ersten Zustand, bei dem sie gespeist und für diesen Zweck über eine Impedanz (I_{REC}) zwischen einer Versorgungsquelle (V_{REC}) und Masse angeschlossen ist, und einem zweiten Zustand, bei dem sie als ein Empfänger eingesetzt und für diesen Zweck zwischen einer Empfangsschaltung (12) und Masse angeschlossen ist, wobei ein erster Schalter (T_{REC}) zwischen dem ersten Anschluß (16) der Spule (1) und der Versorgungsquelle angeordnet ist, **gekennzeichnet** durch
- eine Diode (14), die zwischen dem ersten Anschluß (16) der Spule und dem ersten Schalter gemäß einer Polarität angeschlossen ist, bei der ein Strom von der Versorgungsquelle zur Spule fließen kann,
- einen zweiten Schalter (T_{PB}), der parallel zu der Impedanz (I_{REC}) zwischen dem zweiten Anschluß der Spule (1) und Masse angeschlossen ist,
- eine Vorrichtung (22) zum Ziehen des Potentials des Verbindungspunktes (18) zwischen der Diode (14) und dem ersten Schalter auf Masse, nachdem der erste Schalter geöffnet wurde, und
- eine Detektor- und Steuervorrichtung (20, 24), die mit dem Verbindungspunkt (18) verbunden ist, zum Erfassen des Zeitpunktes, zu dem die Spannung zwischen der Diode und Masse gleich einem vorgegebenen Wert (V_{REF}) wird, der niedriger ist als der Spannungsabfall (V_{D}) über der Diode in Durchlaßrichtung, und zum Steuern des zweiten Schalters (T_{PB}) dadurch.

2. Schaltvorrichtung nach Anspruch 1, dadurch **gekennzeichnet,** daß die Detektor- und Steuervorrichtung einen Vergleicher (20) aufweist, der die Spannung bei dem Verbindungspunkt mit einer vorgegebenen Spannung (V_{REF}) vergleicht, die niedriger ist als der Spannungsabfall der Diode in Durchlaßrichtung.

3. Schaltvorrichtung nach Anspruch 1, dadurch **gekennzeichnet,** daß die Versorgungsquelle mit der Diode über einen Zeitkonstanten-Schaltkreis (5, 6) verbunden ist, wobei der erste Schalter (T_{REC}) zwischen der Versorgungsquelle und dem Zeitkonstanten-Schaltkreis angeordnet ist.

4. Schaltvorrichtung nach Anspruch 1, dadurch **gekennzeichnet,** daß die Impedanz (I_{REC}) eine Stromquelle ist.
